Europäisches Patentamt

(19) European Patent Office

Office européen des brevets

(11) Numéro de publication : **0 301 071 B1**

(12) **FASCICULE DE BREVET EUROPEEN**

(45) Date de publication du fascicule du brevet :
24.04.91 Bulletin 91/17

(51) Int. Cl.⁵ : **F16K 5/02, F16K 31/46**

(21) Numéro de dépôt : **88901851.1**

(22) Date de dépôt : **09.02.88**

(86) Numéro de dépôt international :
**PCT/FR88/00071**

(87) Numéro de publication internationale :
**WO 88/05879 11.08.88 Gazette 88/18**

(54) **VANNE TELEMANIPULABLE.**

(30) Priorité : 09.02.87 FR 8701542

(43) Date de publication de la demande :
01.02.89 Bulletin 89/05

(45) Mention de la délivrance du brevet :
24.04.91 Bulletin 91/17

(84) Etats contractants désignés :
BE DE GB IT SE

(56) Documents cités :
EP-A- 0 147 924
DE-A- 1 425 717
DE-C- 520 332
FR-A- 2 565 664

(73) Titulaire : COMMISSARIAT A L'ENERGIE
ATOMIQUE Etablissement de Caractère
Scientifique Technique et Industriel
31/33, rue de la Fédération
F-75015 Paris (FR)

(72) Inventeur : BRUNEL, Jean
Les Vallauris Chemin Vieux de Lyon
F-30200 Bagnols-sur-Cèze (FR)
Inventeur : CONSTANT, Maurice
20, rue des Clos-de-l'Ancise
F-30200 Bagnols-sur-Cèze (FR)

(74) Mandataire : Mongrédien, André et al
c/o BREVATOME 25, rue de Ponthieu
F-75008 Paris (FR)

Jouve, 18, rue Saint-Denis, 75001 PARIS

## Description

L'objet de la présente invention est une vanne télémanipulable.

Dans certaines industries, on est amené à disposer des vannes dans des locaux inaccessibles à l'intervention humaine à cause des risques de contamination chimique ou radioactive. La maintenance des vannes doit alors être effectuée à l'aide de bras télémanipulables aux possibilités limitées et sous la direction d'un opérateur observant derrière un hublot ou une caméra. On est donc amené à utiliser des vannes de conception aussi facilement démontable que possible, d'autant plus que leurs composants en matériaux organiques tendent à se dégrader beaucoup plus rapidement dans ces milieux agressifs.

D'après une conception actuellement répandue, les vannes sont soudées à un raccord dont on joint les extrémités aux parties fixes de la tuyauterie. Quand une maintenance est nécessaire, la vanne et le raccord sont enlevés, ce qui entraîne plusieurs inconvénients : d'abord, les tuyauteries sont complètement ouvertes sur le local et y déversent leur contenu, ce qui peut aggraver considérablement sa pollution ; ensuite, les composants individuels de la vanne restent peu accessibles et même les remplacements de routine tels que ceux des joints d'étanchéité nécessitent une manipulation assez lourde de pièces dont la durée de vie est infiniment plus importante et que l'on souhaiterait donc laisser sur la tuyauterie.

La vanne selon l'invention permet par contre des manipulations rapides et aisées par bras télémanipulables ainsi que des démontages partiels au cours desquels on se préoccupe aussi peu que possible des parties de la vanne qui ne nécessitent pas d'intervention. En particulier, l'invention permet de maintenir le corps de la vanne sur la tuyauterie, ce qui simplifie beaucoup la maintenance et empêche, dans une large mesure, l'écoulement des produits qu'elle contient.

Le document EP-A-0 147 924 décrit une vanne comprenant un corps fixé de façon permanente à une tuyauterie, un premier ensemble comprenant en particulier un tournant de manoeuvre de la vanne et qui peut être monté dans la vanne et démonté de celle-ci par des mouvements dans une direction perpendiculaire à la tuyauterie, ainsi qu'un deuxième ensemble formé d'une douille liée au corps. Le premier ensemble est situé généralement à l'opposé du deuxième ensemble par rapport à la tuyauterie mais comprend une tige filetée qui, à l'état monté du premier ensemble, s'étend à travers la paroi de fond du corps et s'engage dans un taraudage de la douille.

Le vissage de la douille et de la tige permet de bloquer le premier ensemble sur le corps et de le débloquer du corps selon le sens du mouvement de vissage car des surfaces opposées de la douille viennent buter sur une collerette à l'extrémité du corps.

Comme la douille est à l'opposé du premier ensemble, elle serait facile à saisir par télémanipulation, mais l'engagement de la tige dans le taraudage de la douille qui précède le montage et le blocage du premier ensemble ne serait par contre pas facile à réaliser.

C'est pourquoi on prévoit selon l'invention que le deuxième ensemble est composé d'un premier composant lié au corps et d'un second composant, mobile par rapport au premier dans une direction de translation, portant des surfaces opposées qui appuient sur le premier ensemble de manière à le bloquer sur le corps ou, selon le cas, à le débloquer. Des moyens de butée établis sur le corps permettent en outre de maintenir le premier ensemble engagé sur les surfaces opposées quand il est bloqué sur le corps tout en permettant de le dégager de ces surfaces quand il est débloqué.

Les deux composants du deuxième ensemble peuvent respectivement comprendre un écrou et une plaque de support vissés mutuellement.

Les surfaces opposées peuvent être disposées sur des colonnes s'étendant dans la direction de montage et de démontage à partir de la plaque de support et s'étendant éventuellement à travers des évidements du corps.

Le premier ensemble peut lui-même être démonté si nécessaire. Une disposition permettant ce résultat consiste en ce que le premier composant est lié au corps par un jonc partiellement engagé dans une gorge de corps et partiellement au-dessus d'un épaulement du premier composant.

Le jonc est élastique et sort de la gorge à l'état libre, et le premier composant est muni d'un dispositif de verrouillage mobile à coin qui comprime le jonc et le repousse dans la gorge.

Le premier ensemble peut comprendre une plaque à évidements composés d'une partie étroite et d'une partie large.

Les caractéristiques et avantages de l'invention apparaîtront mieux à la description des différentes figures dont l'énumération suit, et qui sont annexées à titre illustratif et non limitatif :
  – la figure 1 représente le premier ensemble tel qu'il a été défini plus haut en coupe partielle dans un plan vertical passant par l'axe de la tuyauterie,
  – la figure 2 représente le corps et le deuxième ensemble,
  – la figure 3 représente les parties essentielles du premier et du troisième ensemble,
  – la figure 4 représente l'ensemble de la vanne en éclaté,
  – les figures 5 à 10 représentent des étapes du démontage de la vanne par des outillages télémanipulables ; les figures 5, 6, 9 et 10 sont des vues sous le même angle que les figures 1 à 4 ; les figures 7 et 8 sont des vues de dessus.

On commence par décrire individuellement les principaux ensembles constituant la vanne.

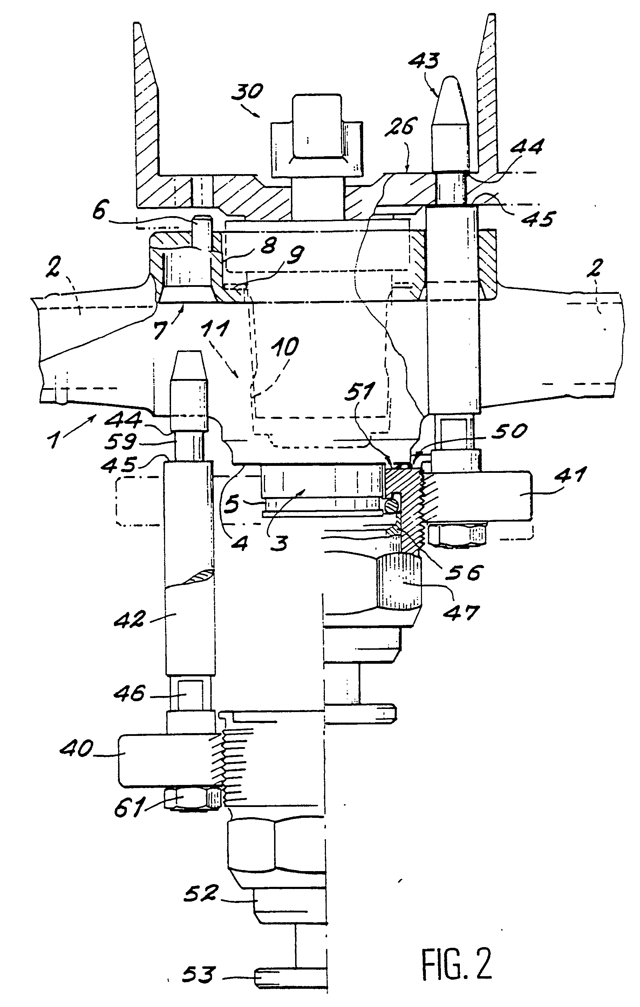

Tout d'abord, sur la figure 2 est représenté le corps 1 de la vanne. Il se compose de quatre parties principales : deux raccords de tuyauterie 2 fixés à une tuyauterie non représentée ici, un embout inférieur 3 et un boisseau central 11 dans lequel sont logées les parties mobiles de la vanne. L'embout 3 est entaillé d'une gorge d'embout 5. Le boisseau 11 s'achève du côté de l'embout 3 par une portée d'écrou 4 de forme annulaire. A l'extrémité supérieure du boisseau 11 sont installés des pions de positionnement 6, ici au nombre de trois. Quatre évidements 7 pour tiges traversent également verticalement le corps 1.

Le contact entre le boisseau 11 et d'autres parties de la vanne est assuré tout d'abord par une portée de boisseau 10 qui est une surface conique communiquant avec l'alésage des raccords de tuyauterie 2, ainsi que vers le sommet du corps 1 par une portée de cage 9 annulaire qui se termine devant un alésage de cage 8 cylindrique.

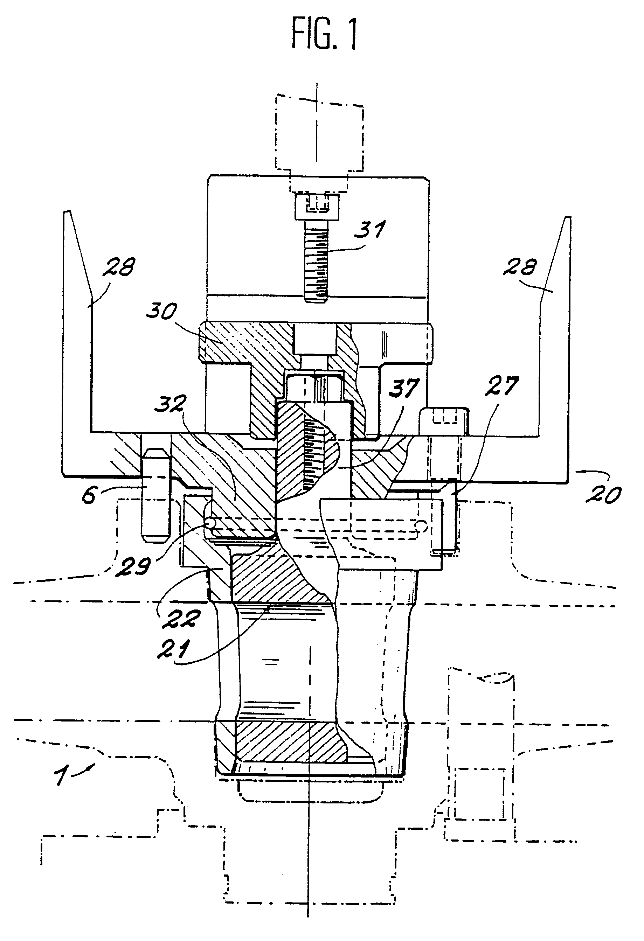

Le corps 1 contient une partie des pièces du premier ensemble ou ensemble interne référencé 20 sur la figure 1. Cet ensemble interne 20 comprend tout d'abord un organe de manoeuvre ou tournant 21 qui tour à tour ouvre et ferme la vanne. Il est enserré dans une cage 22 qui porte des bagues, non représentées ici car de type connu, en contact avec le tournant 21 et le boisseau 11 de façon à garantir l'étanchéité entre parties fixes et mobiles de la vanne.

Les bagues sont en matériau organique tel que le plastique qui présente un coefficient de frottement réduit. Leur durée de vie est toutefois très inférieure à celle des constituants métalliques de la vanne et il faut prévoir leur remplacement à intervalles de temps assez réduits.

Un couvercle 26 est relié à la cage 22 par l'intermédiaire d'un culot 32. Un jonc 29 disposé à la fois dans une rainure du culot 32 et dans un logement de la cage 22 assure la liaison de la cage 22 et du couvercle 26 tout en autorisant une certaine translation entre ces deux pièces. Par contre, leur déplacement relatif en rotation est interdit par une vis d'arrêt 27.

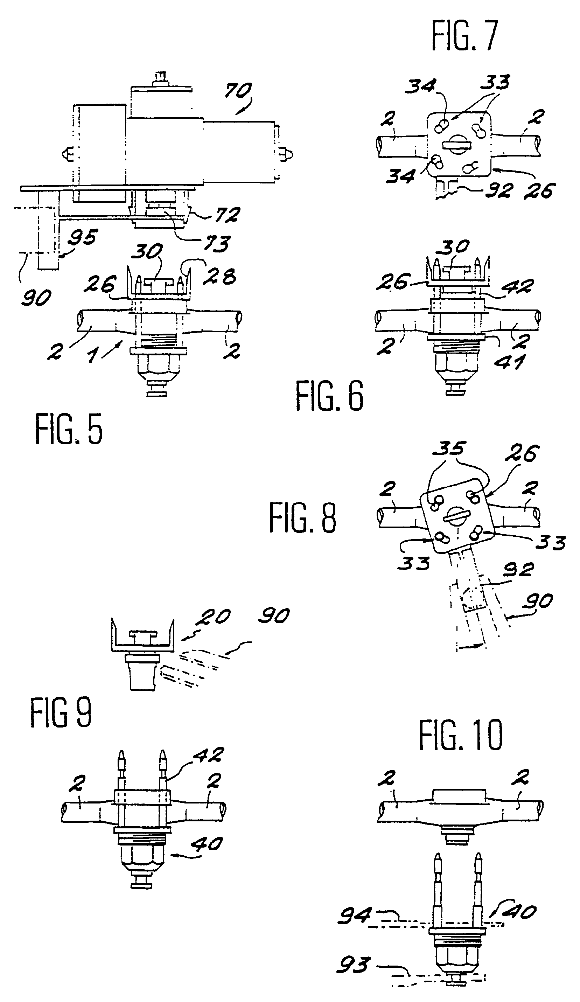

Le couvercle 26 est percé en outre de neuf orifices : trois orifices pour les pions de positionnement 6 du corps 1, deux orifices pour des pions de positionnement 76 de l'actionneur 70 dont on va reparler ci-après, ces divers orifices n'étant généralement pas représentés ici ; le couvercle 26 comprend encore quatre orifices à appendice 33 (représentés figures 7 et 8) dont l'orifice proprement dit est représenté par 34 et l'appendice par 35.

A la périphérie du couvercle 26 sont également fixées des plaques circonférentielles à chanfrein intérieur 28.

Le tournant 21 comprend un axe 37 qui traverse le culot 32 et le couvercle 26 et à l'extrémité duquel est implantée une clé 30 à section polygonale à l'aide d'une vis d'immobilisation 31.

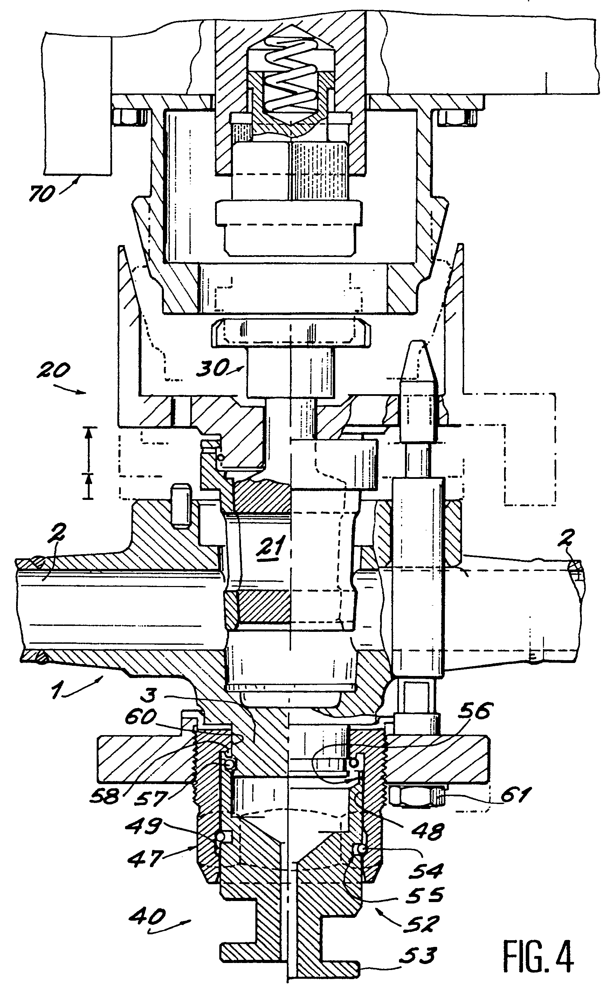

La vanne comprend encore un deuxième ensemble ou ensemble de maintien 40 que l'on représente à la fois sur les figures 2 et 4. Il comprend tout d'abord une plaque support 41 de quatre tiges 42 que l'on peut faire coulisser dans les évidements pour tiges 7 situés dans le corps 1 jusqu'à ce que la portée d'écrou 4 vienne en contact avec une portée d'appui de corps 51 (par l'intermédiaire d'une bague d'appui annulaire 50) qui appartient à un écrou 47 mobile dans un taraudage de la plaque support 41.

Les tiges 42 comprennent un bout chanfreiné 43 qui peut, sur l'une d'entre elles, porter un repère pour un positionnement angulaire correct lors d'un remontage de l'ensemble de maintien 40 ; elles comprennent également un amincissement 59 qui est à hauteur du couvercle 26 lors du montage de la vanne et qui est limité par un épaulement de déblocage 45 inférieur et par un épaulement de blocage 44 supérieur. Elles comprennent enfin, à leur partie inférieure, une zone de guidage angulaire 46 munie d'un méplat, qui s'engage dans la plaque support 41 et se prolonge par un filetage dépassant de la surface inférieure de la plaque support 41 ; des écrous de blocage 61 permettent d'immobiliser les tiges 42 sur la plaque support 41.

L'ensemble de maintien 40 comprend encore un équipement particulier que l'on va décrire à présent.

L'écrou 47 est percé, comme on le constate figure 4, d'un alésage d'écrou 48 lui-même entaillé par une gorge de coulissement 49. Un alésage d'embout 60 est exécuté au sommet de l'écrou 47 et relié à l'alésage d'écrou 48, qui est de plus grand diamètre, par un épaulement de soutien 58. Quand la vanne est montée, l'embout 3 du corps 1 est en contact avec l'alésage d'embout 60 et la gorge d'embout 5 est située juste sous l'épaulement de soutien 58. En face de la gorge d'embout 5 est installé un jonc de retenue 57 dont le diamètre intérieur est plus important que le diamètre de l'embout 3, si bien que l'ensemble de maintien 40 avec les pièces décrites jusqu'ici n'est pas soutenu par le corps 1 et tomberait sous l'effet de la gravité.

C'est pour cela qu'a été prévu un collier 52 de forme générale cylindrique que l'on insère dans l'alésage d'écrou 48. Le collier 52 comprend une gorge de jonc d'arrêt 55 qui contient par conséquent un jonc d'arrêt 54 ; quand le collier 52 est monté, le jonc d'arrêt coulisse dans la gorge de coulissement 49, plus large que la gorge de jonc d'arrêt 55, dans une position quelconque entre deux épaulements qui limitent la gorge de coulissement 49.

A la partie supérieure du collier 52 est ménagé un coin 56 qui, lorsque le collier 52 est repoussé vers le haut, tend à plaquer le jonc de retenue 57 dans la gorge d'embout 5. Quand le collier 52 a été complètement repoussé, le jonc de retenue 57 est comprimé dans le sens radial et exerce une force de coincement entre l'embout 3 et le collier 52 ; parallèlement, il empêche l'ensemble de maintien 40 de tomber en établissant un contact entre l'épaulement de soutien 58 et l'épaulement inférieur de la gorge d'embout 5.

Pour dégager l'ensemble de maintien 40 du corps 1, il suffit de faire redescendre le collier 52 jusqu'à ce que le jonc de retenue 57 soit libéré. Une collerette 53 qui dépasse en bas de l'écrou 47 permet d'effectuer ces déplacements du collier 52 d'une manière très aisée.

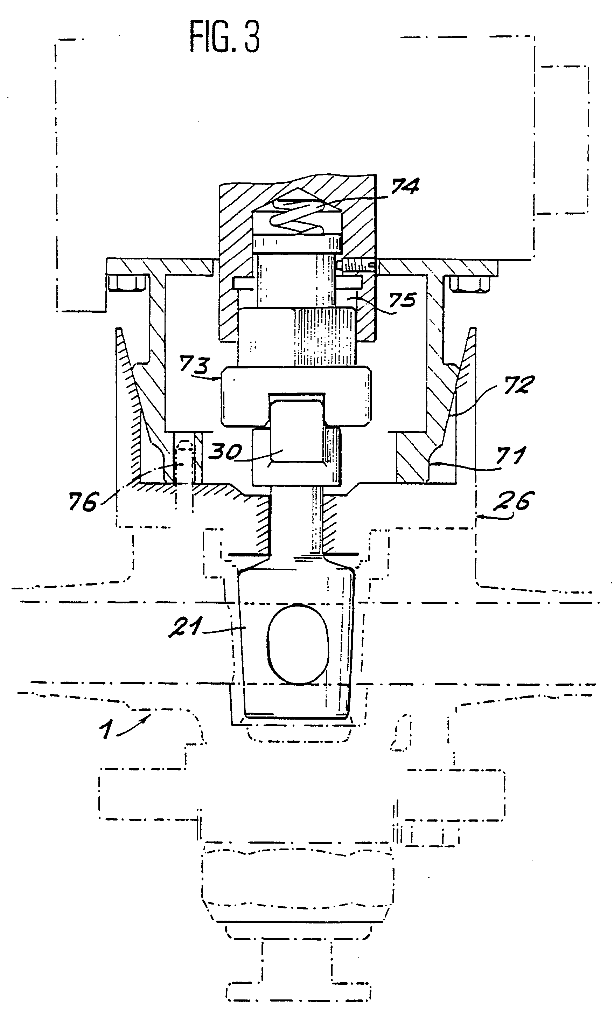

La vanne comprend encore un troisième ensemble ou actionneur référencé 70 et dessiné pour sa partie la plus importante – le reste est connu en soi – figure 3. Il comprend essentiellement une plaque de positionnement 71 percée d'orifices destinés à recevoir les extrémités chanfreinées 43 des tiges 42, ainsi que les extrémités des pions de positionnement 76 du couvercle 26 dont un seul est représenté ici.

Une arcade circonférentielle de précentrage 72 s'adapte sur les plaques à chanfrein 28 et réalise un premier contact avec le reste de la vanne au cours du montage.

Le tournant 21 peut être actionné par l'intermédiaire d'une clé d'actionneur 73 dont l'extrémité est de forme complémentaire de celle de la clé 30 et dont l'engrènement est assuré à l'aide d'un ressort 74 qui permet à la clé d'actionneur 73 de coulisser dans un logement 75 et qui crée une force verticale, parallèle à l'axe commun des deux clés.

L'ensemble de la vanne est représenté schématiquement sur la figure 4. L'ensemble interne 20 est placé au-dessus du corps 1 et maintenu par gravité. De même, l'actionneur 70 est au-dessus de l'ensemble interne 20 et maintenu sur ce dernier par gravité. Enfin, l'ensemble de maintien 40 est situé sous le corps 1 et maintenu en place à l'aide du collier 32 et du jonc de retenue 57 ; toutefois, ce dispositif est insuffisant et c'est pourquoi, en service normal, les tiges 42 sont utilisées à la fois pour maintenir la plaque support 41 à l'aide d'écrous de blocage 61 et pour maintenir solidement l'engagement de l'ensemble interne 20 et du corps 1, les amincissements 59 étant engagés dans les appendices 35 et les épaulements de blocage 44 appuyant alors sur la face supérieure du couvercle 26. Les tiges 42 servent donc avant tout de tirants et maintiennent à la fois le premier ensemble 20 et le deuxième ensemble 40 solidement en place sur le corps 1.

Dans le cas d'une opération de maintenance, la vanne décrite ici fait l'objet de manipulations particulières et simplifiées de démontage et de remontage qui justifient l'intérêt porté à l'invention. C'est ce qui va être maintenant décrit à l'aide des figures 5 à 10.

Lors d'un démontage de la vanne, la première opération consiste à ôter l'actionneur 70. C'est ce que représente la figure 5. Il suffit en fait de soulever l'actionneur 70 à l'aide d'un bras de télémanipulateur terminé par une pince 90 agissant sur une poignée adaptée 95. Les arcades de précentrage 72 et les plaques à chanfrein 28 d'une part, la clé d'actionneur 73 et la clé 30 d'autre part se trouvent disjointes. L'actionneur 70 peut alors être examiné ou remplacé.

L'étape suivante consiste à extraire l'ensemble interne 20. Pour cela, on procède en deux étapes.

La première est un déblocage. En effet, les surfaces de contact de l'ensemble interne 20 et du corps 1 sont coincées et les télémanipulateurs n'ont pas la force suffisante pour procéder à une extraction directe. C'est en partie pour cette raison qu'un ensemble de maintien 40 a été prévu. En effet, le dévissage de l'écrou 47 auquel on procède alors amène à soulever la plaque support 41 et donc les tiges 42. Le couvercle 26 jusqu'alors plaqué vers le bas par les vis 42 et en contact avec les épaulements de blocage 44 se trouve maintenant appuyé sur les épaulements de déblocage 45 et soulevé. Pendant ce temps, le jonc de retenue 57 est plaqué par le coin 56 dans la gorge d'embout 5 et rend donc l'écrou 47 solidaire du corps 1. Cette étape est représentée par la figure 6.

On procède ensuite à l'extraction proprement dite de l'ensemble interne 20. Une pince 90 prend appui sur une poignée 92 du couvercle 26 et lui imprime une rotation afin d'arriver à l'état de la figure 8 à partir de l'état de la figure 7. Les amincissements 59 des tiges 42, qui étaient jusqu'alors logés dans les appendices 35 des orifices à appendice 33, se trouvent maintenant dans les orifices proprement dits 34 dont le diamètre est supérieur à celui des bouts chanfreinés 43. Cette rotation a été rendue possible parce que l'opération de déblocage décrite précédemment a dégagé le couvercle 26 des pions de positionnement 6.

La pince 90 soulève et enlève alors l'ensemble interne 20, comme le représente la figure 9. Elle peut alors l'amener à un poste de travail pourvu d'outils de télémanipulation aux possibilités plus étendues, qui peuvent en particulier disjoindre le couvercle 26 de la cage 22. La description peut être faite simplement à l'aide de la figure 1. On commence par dévisser la vis d'immobilisation 31 et la vis d'arrêt 27 qui immobilise en rotation le couvercle 26 et la cage 22 ; ces deux dernières pièces sont alors saisies et écartées au maximum l'une de l'autre puis mises en rotation de telle manière que le jonc 29 sort de sa rainure et peut être extrait après que le culot 32 a été sorti.

Pour extraire le tournant 21 de la cage 22, il suffit de placer sur la cage 22 une entretoise d'épaisseur suffisante, de replacer la clé 30 à l'extrémité de l'axe 37 et de serrer la vis d'immobilisation 31 : on crée alors une force de traction dans la vis d'immobilisation 31 qui entraîne l'extraction et le dégagement du tournant 21. Toutes les parties à usure rapide de l'ensemble interne 20, c'est-à-dire en particulier les bagues d'étanchéité entre le tournant 21 et la cage 22 d'une part, la cage 22 et le boisseau 11 d'autre part, peuvent alors être facilement remplacées.

En principe, les opérations de démontage et de maintenance que l'on vient de décrire doivent être suffisantes. Cependant, il peut être nécessaire dans certains cas d'extraire également l'ensemble de maintien 40. On procède alors comme indiqué figure 10 : on dispose un doigt 93 sur la face supérieure de la collerette 53 et une pince de soutien 94 solidaire du doigt 93 juste au-dessus de la plaque support 41 pour limiter la course du collier 52 dans l'alésage 48 de l'écrou 47. Dans une première opération, le doigt 93 tire la collerette 53 vers le bas, ce qui supprime le contact entre le coin 56 et le jonc de retenue 57 qui sort donc de la gorge d'embout 5 comme le représente la moitié droite de la figure 4. L'ensemble de maintien est donc désolidarisé du corps 1 et peut être transporté par l'outil constitué par le doigt 93 et par la pince de soutien 94.

Le remontage de la vanne ne sera pas décrit en détail ici car il implique, dans l'ordre inverse du démontage, les opérations exactement complémentaires de celles décrites ci-dessus. La seule différence consiste en ce que l'insertion des pions de positionnement, de centrage ainsi que des tiges 42 dans le couvercle 26 doit être réalisée, ce qui nécessite une délicatesse de manipulation un peu plus importante. Néanmoins, les problèmes ainsi soulevés ne nécessitent pas d'outillage télémanipulable particulier et peuvent donc être facilement résolus par l'homme de l'art.

On constate que le placement du deuxième ensemble 40 à l'opposé du premier ensemble 20 – et accessoirement du troisième ensemble 70 – par rapport au corps 1 est très avantageux, car il n'est pas nécessaire de démonter le deuxième ensemble 40 pour extraire le premier ensemble 20 et de plus les manipulations à distance s'effectuent sur des éléments du deuxième ensemble 40 faciles d'accès car isolés du reste de la vanne.

La description des figures ne concerne cependant qu'une réalisation favorite de l'invention dans laquelle l'actionneur 70 et l'ensemble interne 20, qui sont les ensembles qui nécessitent les maintenances les plus nombreuses, sont extraits par soulèvement simple et déposés par gravité. D'autres réalisations peuvent être envisagées tout en restant dans le cadre de l'invention tel qu'il est défini par les revendications.

## Revendications

1. Vanne comprenant un corps (1) fixé de façon permanente sur une tuyauterie, des ensembles séparables du corps par des mouvements de translation sensiblement perpendiculaires à la tuyauterie, un premier de ces ensembles (20) comprenant un tournant (21) de la vanne, un deuxième de ces ensembles (40) étant généralement placé à l'opposé du premier ensemble par rapport au corps, assurant le blocage et le déblocage du premier ensemble (20) par rapport au corps et comprenant un premier composant (47, 52) lié au corps, caractérisée en ce que le deuxième ensemble comprend en outre un second composant mobile par rapport au premier composant dans une direction de translation de montage et de démontage, le second composant comprenant des surfaces opposées (44, 45) qui appuient sur le premier ensemble de façon à le bloquer sur le corps et à le débloquer du corps selon les mouvements du second composant, et en ce que le corps (1) est muni de moyens de butée (6) constitués de façon à empêcher de dégager le premier ensemble des surfaces opposées quand le premier ensemble est bloqué et à autoriser ce dégagement quand le premier ensemble est débloqué.

2. Vanne selon la revendication 1, caractérisée en ce que le premier et le second composants comprennent respectivement un écrou (47) et une plaque de support (41) qui sont mutuellement vissés.

3. Vanne selon la revendication 2, caractérisée en ce que les surfaces opposées (44, 45) sont établies sur des colonnes (42) qui s'étendent le long du corps à partir de la plaque de support (41) dans la direction de montage et de démontage.

4. Vanne selon l'une quelconque des revendications 1 à 3, caractérisée en ce que le premier composant est lié au corps par l'intermédiaire d'un jonc (57) engagé partiellement dans une gorge (5) du corps et partiellement au-dessous d'un épaulement (58) du premier composant.

5. Vanne selon les revendications 3 et 4, caractérisée en ce que les colonnes (42) s'étendent à travers des évidements (7) du corps.

6. Vanne selon la revendication 4, caractérisée en ce que le jonc (57) est élastique et sort de la gorge (5) à l'état libre, le premier composant comprenant un dispositif de verrouillage mobile (52) muni d'un coin (56) qui comprime le jonc (57) et l'engage dans la gorge (5).

7. Vanne selon la revendication 6, caractérisée en ce que le dispositif de verrouillage est mobile dans le premier composant au moyen d'un autre jonc (54) qui s'étend partiellement dans une deuxième gorge (49) limitée par deux épaulements.

8. Vanne selon l'une quelconque des revendications 1 à 7, caractérisée en ce que les moyens de butée (6) sont des pions s'étendant à partir du corps (1) dans la direction de démontage.

9. Vanne selon la revendication 8, caractérisée en ce que le premier ensemble comprend une plaque munie de perçages pour recevoir les pions et d'orifices (33) composés d'une partie étroite (35) pour l'engagement avec les surfaces opposées (44, 45) du second composant et d'une partie large (34) pour le dégagement des surfaces opposées.

10. Vanne selon l'une quelconque des revendications 1 à 9, caractérisée en ce qu'elle comprend un troisième ensemble (70) pour la manoeuvre du tournant (21).

11. Vanne selon la revendication 10, caractérisée en ce que le troisième ensemble est placé sur le premier ensemble (20) et maintenu en place par gravité, le premier ensemble étant situé sur le corps et le deuxième ensemble généralement sous le corps.

12. Vanne selon la revendication 11, caractérisée en ce que le troisième ensemble manoeuvre le tournant (21) par la mise en prise (30, 73) de deux arbres coaxiaux leur appartenant respectivement et qui sont poussés l'un contre l'autre par un mécanisme à ressort (74).

## Ansprüche

1. Ventil mit einem Körper (1), der permanent auf einem Schlauch befestigt ist, mit Anordnungen, die durch im wesentlichen zum Schlauch senkrechten Translationsbewegungen von dem Körper trennbar sind, wobei eine erste dieser Anordnungen (20) ein Drehteil (21) des Ventils umfaßt und eine zweite dieser Anordnungen (40) im allgemeinen bezüglich dem Körper gegenüber der ersten Anordnung angeordnet ist, wodurch das Blockieren und Lösen der ersten Anordnung (20) bezüglich dem Körper sichergestellt wird, und mit einem ersten mit dem Körper verbundenen Bestandteil (47, 52), dadurch gekennzeichnet, daß die zweite Anordnung außerdem einen zweiten Bestandteil umfaßt, der bezüglich des ersten Bestandteils in einer Montage- und Demontagetranslationsrichtung beweglich ist, wobei der zweite Bestandteil gegenüberliegende Oberflächen (44, 45) umfaßt, die sich derart auf die erste Anordnung stützen, daß sie diese am Körper blockieren und vom Körper lösen entsprechend den Bewegungen des zweiten Bestandteils, und daß der Körper (1) mit Anschlagsvorrichtungen (6) versehen ist, die so angeordnet sind, daß sie verhindern, daß sich die erste Anordnung von gegenüberliegenden Oberflächen lösen, wenn die erste Anordnung blockiert ist, und daß sie dieses Lösen ermöglichen, wenn die erste Anordnung gelöst ist.

2. Ventil nach Anspruch 1, dadurch gekennzeichnet, daß die ersten und zweiten Beatandteile jeweils eine Mutter (47) und eine Stützplatte (41) umfassen, die gegenseitig verschraubt sind.

3. Ventil nach Anspruch 2, dadurch gekennzeichnet, daß die gegenüberliegenden Oberflächen (44, 45) auf Stäben (42) angeordnet sind, die sich entlang des Körpers von der Stützplatte (41) aus in Richtung der Montage und Demontage erstrecken.

4. Ventil nach einem der Ansprüche 1 bis 3, dadurch gekennzeichnet, daß der erste Bestandteil über ein Gelenk (57), das teilweise in einer Auskehlung (5) des Körpers und teilweise unter einer Schulter (58) des ersten Bestandteils befestigt ist, mit dem Körper befestigt ist.

5. Ventil nach den Ansprüchen 3 und 4, dadurch gekennzeichnet, daß sich die Stäbe (42) durch Aushöhlungen (7) im Körper erstrecken.

6. Ventil nach Anspruch 4, dadurch gekennzeichnet, daß das Gelenk (57) elastisch ist und im freien Zustand aus der Auskehlung (5) austritt, wobei der erste Bestandteil eine bewegliche Verriegelungsvorrichtung (52) umfaßt, die mit einem Keil (56) versehen ist, der das Gelenk einzwängt und es in der Aushöhlung (5) befestigt.

7. Ventil nach Anspruch 6, dadurch gekennzeichnet, daß die Verriegelungsvorrichtung im ersten Bestandteil mittels eines weiteren Gelenks (54) beweglich ist, das sich teilweise in einer zweiten, von zwei Schultern begrenzten Auskehlung (49) erstreckt.

8. Ventil nach einem der Ansprüche 1 bis 7, dadurch gekennzeichnet, daß die Anschlagsvorrichtungen (6) Metallstücke sind, die sich von Körper (1) in Richtung der Demontage erstrecken.

9. Ventil nach Anspruch 8, dadurch gekennzeichnet, daß die erste Anordnung eine Platte umfaßt, die mit Bohrungen zum Aufnehmen der Metallstücke und Öffnungen (33) versehen ist, die aus einem engen Teil (35) zum Befestigen mit den gegenüberliegenden Oberflächen (44, 45) des zweiten Bestandteils und einem breiten Teil (34) zum Lösen der gegenüberliegenden Oberflächen zusammengesetzt sind.

10. Ventil nach einem der Ansprüche 1 bis 9, dadurch gekennzeichnet, daß es eine dritte Anordnung (70) zum Bedienen des Drehteils (21) umfaßt.

11. Ventil nach Anspruch 10, dadurch gekennzeichnet, daß die dritte Anordnung auf der ersten Anordnung (20) angeordnet ist und durch die Schwerkraft festgehalten wird, wobei sich die erste Anordnung auf dem Körper und die zweite Anordnung im allgemeinen unter dem Körper befindet.

12. Ventil nach Anspruch 11, dadurch gekennzeichnet, daß die dritte Anordnung das Drehteil (21) durch Ergreifen von zwei koaxialen Wellen (30, 73), die jeweils zu ihnen gehören und die durch einen Federmechanismus (74) gegeneinander gedrückt sind, bedient.

## Claims

1. Valve comprising a body (1) permanently fixed to a pipe, assemblies which can be separated from the body by translatory movements substantially perpendicular to the pipe, a first of said assemblies (20) having an operating member (21) for the valve, a second of the said assemblies (40) being generally placed opposite the first assembly with respect to the body and ensuring the locking and unlocking of the first assembly (20) with respect to the body and incorporating a first component (47, 52) connected to the body, characterized in that the second assembly also comprises a second component mobile with respect to the first component in a fitting and removal translatory direction, the second component having opposite surfaces (44, 45) bearing on the first assembly so as to lock it on the body and unlock it with respect to the body as a function of the movements of the second component and in that the body (1) is provided with abutment means (6) constructed so as to prevent the disengagement of the first assembly from the opposite surfaces when the first assembly is locked and authorizing said disengagement when the first assembly is unlocked.

2. Valve according to claim 1, characterized in that the first and second components respectively comprise a nut (47) and a support plate (41), which are screwed together.

3. Valve according to claim 2, characterized in that the opposite surfaces (44, 45) are produced on columns (42) extending along the body from the support plate (41) in the fitting and removal direction.

4. Valve according to any one of the claims 1 to 3, characterized in that the first component is connected to the body via a ring (57) partly engaged in a groove (5) of the body and partly below a shoulder (58) of the first component.

5. Valve according to claims 3 and 4, characterized in that the columns (42) extend through recesses (7) in the body.

6. Valve according to claim 4, characterized in that the ring (57) is elastic and passes out of the groove (5) in the free state, the first component incorporating a mobile locking device (52) equipped with a wedge (56) which compresses the ring (57) and engages it in the groove (5).

7. Valve according to claim 6, characterized in that the locking device is mobile in the first component by means of another ring (54), which partly extends into the second groove (49) limited by two shoulders.

8. Valve according to any one of the claims 1 to 7, characterized in that the abutment means (6) are pins extending from the body (1) in the dismantling direction.

9. Valve according to claim 8, characterized in that the first assembly comprises a plate provided with perforations for receiving the pins and orifices (33) formed by a narrow portion (35) for the engagement with the opposite surfaces (44, 45) of the second component and a wide portion (34) for the disengagement of the opposite surfaces.

10. Valve according to any one of the claims 1 to 9, characterized in that it comprises a third assembly (70) for manipulating the operating member (21).

11. Valve according to claim 10, characterized in that the third assembly is placed on the first assembly (20) and is maintained in place by gravity, the first assembly being located on the body and the second assembly generally beneath the body.

12. Valve according to claim 11, characterized in that the third assembly manipulates the operating member (21) by the engagement (30, 73) of two coaxial shafts respectively belonging thereto and which are pushed against one another by a spring mechanism (74).

# FIG. 1

FIG. 2

# FIG. 3

FIG. 4

FIG. 7

FIG. 5

FIG. 6

FIG. 8

FIG 9

FIG. 10